# FASCICULE DE BREVET EUROPEEN

(11) **EP 0 963 123 B1**
(45) Date de publication et mention de la délivrance du brevet: **15.07.2009**
(21) Numéro de dépôt: 99401210.2
(22) Date de dépôt: 20.05.1999
(51) Int. Cl.: H04Q 3/00

(54) **Autocommutateur muni d'un coupleur de communications de signalisation et procédé d'envoi d'un message de signalisation**
Vermittlungsanlage mit einem Signalierungskommunikationskoppler und Verfahren zum Senden einer Signalierungsnachricht
Exchange with a signalling communications coupler and method for sending a signalling message

(30) Priorité: 02.06.1998 FR 9806908
(43) Date de publication de la demande: 08.12.1999
(73) Titulaire: Alcatel Lucent, 75008 Paris (FR)
(72) Inventeur: Laroque, Christian, 92500 Rueil-Malmaison (FR); Litteaut, Jacques, 78160 Marly le Roi (FR)
(74) Mandataire: Sciaux, Edmond

(56) Documents cités:
- EP-A- 0 788 283
- DE-C- 19 644 787
- FR-A- 2 728 749
- US-A- 5 420 916

## Description

La présente invention a pour objet un autocommutateur muni d'un coupleur de communications de signalisation. Elle a également pour objet un procédé d'envoi de messages de signalisation. Elle est principalement utilisée dans le domaine des télécommunications dans le but de transmettre des signaux de signalisation, utiles notamment à la gestion de centraux téléphoniques, c'est-à-dire des autocommutateurs privés ou publics.

Le document DE 196 44787C décrit un procédé consistant à convertir des données de commande d'appel, en des paramètres neutres, dans le but de faciliter le traitement de ces données dans un central téléphonique. Les données de commande d'appel sont converties en paramètres neutres puis sont traitées par le central, dans leur format neutre.
Le but de l'invention est de rendre la transmission des signaux de signalisation plus transparente malgré la diversité des techniques de transmission et des protocoles adoptés.

Dans les réseaux de communication reliant entre eux plusieurs centraux (privés ou publics), les communications sont réparties dans des canaux. On connaît ainsi, d'une manière à peu près générale, des canaux dits B pour canaux banalisés et qui servent à la transmission de messages entre les interlocuteurs divers. Les interlocuteurs peuvent être des personnes et dans ce cas les messages peuvent être des messages verbaux. Les interlocuteurs peuvent aussi être des machines et dans ce cas les messages seront des messages d'informations numérisées. Sur le plan pratique les transmissions analogiques pour les messages de personnes sont par ailleurs abandonnées au profit de transmissions numériques dont la qualité de transmission est meilleure.

A côté de ces canaux banalisés, existent des canaux dits D qui servent à acheminer des données de signalisation. En effet l'administration des centraux nécessite que les centraux, ou les autocommutateurs, se transmettent des messages relatifs à leur disponibilité et à leur mode de fonctionnement. Par exemple, si un central téléphonique est relié à une station de base d'un réseau de téléphonie mobile du type TDMA (Time Division Multiplexed Access), il est nécessaire de transmettre une synchronisation, de transmettre l'heure, aux différents mobiles qui sont susceptibles d'entrer en contact avec la station de base. Dans un autre exemple, dans le protocole X25, avant qu'un message ne puisse être envoyé, il est nécessaire de communiquer aux circuits qui le placent dans le trafic, des informations relatives à la place temporelle et aux informations d'encapsulation qui doivent encadrer le message.

Pour simplifier l'explication on retiendra que dans un système de communication numérisé, en France, il existe des services dits T2 comportant ainsi pour l'utilisateur trente canaux B de transmission de parole, et un canal D de transmission de messages de signalisation.

Le problème de la gestion des messages de signalisation est essentiellement lié au protocole qui organise une liaison entre deux centraux téléphoniques. Pour une telle liaison, ce protocole est connu par les deux centraux reliés, et les messages de signalisation y sont normalement acheminés entre eux. Eventuellement, si un message de signalisation doit être acheminé vers un autre central, mais utilisant une liaison avec un même protocole de transmission de messages de signalisation, le message de signalisation peut être réacheminé tel quel. Il sera correctement exécuté par le central final.

Un problème se pose par contre lorsque, au sein d'un réseau mixte, les canaux de communication sont hétérogènes. Dans ce cas, soit le message de signalisation ne peut pas être acheminé soit, pour qu'il le soit, un central de réseau auquel aboutissent des liaisons avec des protocoles distincts doit comporter autant de transcodeurs pour réacheminer les messages de signalisation qu'il y a de couples de protocole de transmission différents pour ces messages de signalisation. Compte tenu de la variété actuelle des canaux de signalisation et, dans ces canaux, des protocoles employables, un tel transcodage des messages de signalisation n'est pas entrepris. Tout l'intérêt des canaux de signalisation est perdu dès que le réseau n'est plus homogène.

L'invention a pour objet de remédier à ce problème et de proposer une solution générique qui puisse sans difficulté s'adapter à toute la variété possible des protocoles de transmission de signaux de signalisation. Dans l'invention, la modification des équipements sera toujours la même, ce qui induira une réduction du coût de ces équipements fabriqués en grande quantité. Le principe de l'invention repose sur deux moyens principaux. Premièrement, à l'envoi d'un message de signalisation est attribué une syntaxe d'un ordre prédéterminé. Cet ordre prédéterminé sera toujours le même, quelles que soient les ressources utilisables dans un central téléphonique pour acheminer un message de signalisation. Deuxièmement, sur le plan physique, chaque central, chaque autocommutateur, disposera alors d'un interprêteur pour produire une configuration de communication de .signalisation correspondant d'une part aux ressources de transmission de messages de signalisation accessibles avec ce central de communication. D'autre part, cet interpréteur se mettra en service en réponse à la réception de cet ordre prédéterminé.

Dans l'invention on proposera en outre l'emploi, pour cet ordre prédéterminé, d'une syntaxe spécifique à un canal de transmission connu. Ce canal de transmission connu de signaux de signalisation le plus courant, est celui utilisé dans l'état de la technique, pour les canaux de type T2 évoqués ci-dessus. Dans ces conditions chaque central téléphonique sera capable de transmettre le message de signalisation en utilisant des protocoles qui lui sont propres sans avoir à développer de matériel spécifique.

La présente invention a donc pour objet un autocommutateur muni d'un coupleur de communications de signalisation, ce coupleur comportant une pluralité d'interfaces correspondant respectivement à une pluralité de protocoles de transmission de signaux de signalisation ; caractérisé en ce qu'il comporte un interpréteur pour :
- recevoir un message de signalisation ;
- recevoir une chaîne prédéterminée de caractères supplémentaires, représentant un ordre d'envoi et destinée à être adjointe audit message ;
- interpréter cette chaîne de caractères pour encapsuler ledit message de signalisation conformément à l'un desdits protocoles de transmission de message de signalisation ;
- et mettre en service l'interface correspondant à ce protocole

Elle a également pour objet un procédé d'envoi d'un message de signalisation par un central téléphonique ayant un coupleur comportant une pluralité d'interfaces correspondant respectivement à une pluralité de protocoles de transmission de signaux de signalisation ; caractérisé en ce qu'il comporte les étapes suivantes :
- recevoir un message de signalisation ;
- recevoir une chaîne prédéterminée de caractères supplémentaires, représentant un ordre d'envoi et destinée à être adjointe audit message ;
- interpréter cette chaîne de caractères pour encapsuler ledit message de signalisation conformément à l'un desdits protocoles de transmission de message de signalisation ;
et mettre en service l'interface correspondant à ce protocole .

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : un coupleur de communications de signalisation conforme à l'invention utilisable dans un autocommutateur ;
- Figure 2 : les étapes essentielles du procédé de l'invention.

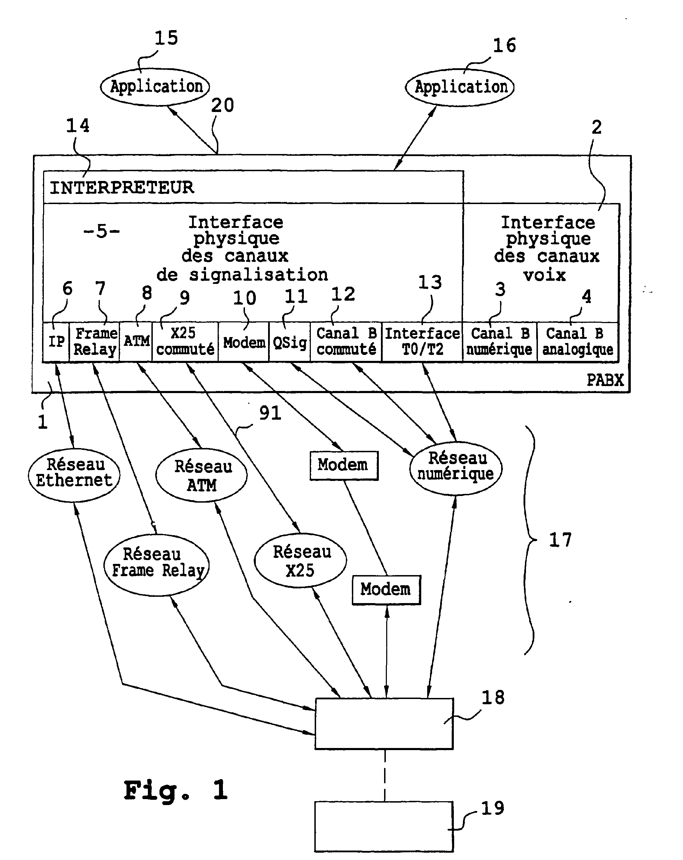

La figure 1 montre un coupleur 1 de communications de signalisation conforme à l'invention. Ce coupleur 1 est destiné à être placé dans un central téléphonique de canaux de transmission de données de signalisation, entre une entrée et une sortie de réseau. Ce coupleur 1 comporte d'une manière connue une interface physique 2 avec des canaux banals B de transmission de données. Cette interface 2 peut être ainsi connectée sur une sortie 3 de canal B numérique ou sur une sortie 4 de canal B analogique. Le coupleur 1 comporte également une interface physique 5 de transmission de signaux de signalisation. Cette interface physique, objet de l'invention, peut ainsi comporter divers circuits 6 à 13 relatifs à l'interface de différents protocoles. Il peut s'agir, à titre non exhaustif, des protocoles IP utilisables pour le réseau Ethernet, du protocole Frame Relay pour un réseau de ce même type, du protocole ATM, du protocole X25 commuté, d'un protocole générique de modem (pour ce dernier avec toutes les déclinaisons possibles des modes de compression et de débit), d'un protocole QSIG, ou d'un protocole canal B commuté. Il peut encore s'agir d'une interface, de type connu, au format T0 ou T2. Les trois derniers protocoles attaquent des réseaux numériques.

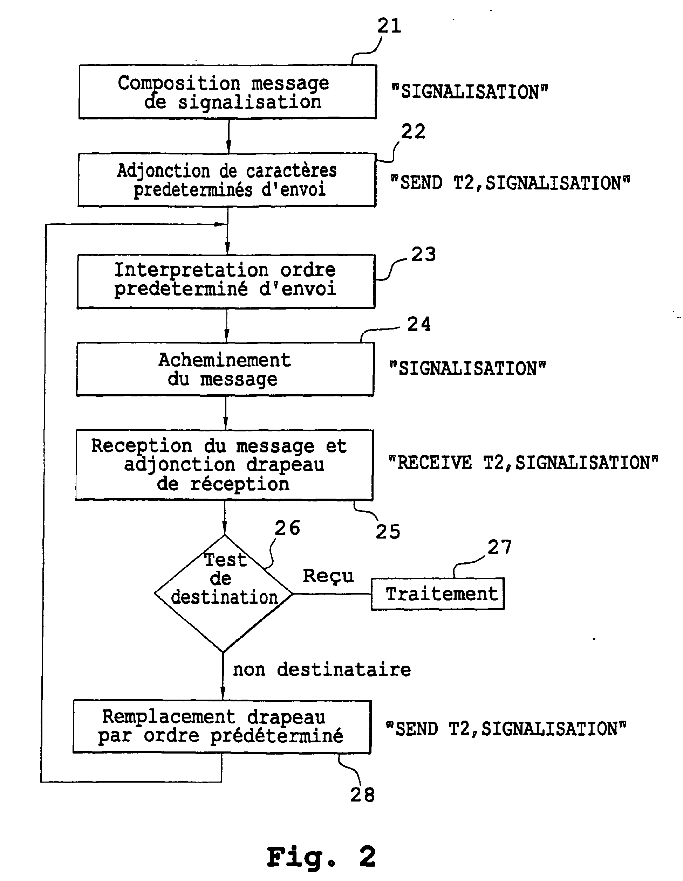

Selon l'invention l'interface 5 est séparée, pour la transmission des messages de signalisation, des organes 15 ou 16 générateurs de ces messages par un module interpréteur 14. Comme on verra par la suite le module interpréteur 14 est capable de mettre en oeuvre le programme de la figure 2 pour transformer un message de signalisation délivré par un organe 15 ou 16 en un message facilement transmissible dans un réseau de communications 17 possédant éventuellement, à des noeuds interposés 18 des conversions de protocole de transmission avant que le message de signalisation n'aboutisse à un central 19 auquel il était destiné. Sur le plan pratique, les organes 15 ou 16, dans la mesure où ils sont essentiellement chargés d'organiser les communications entre le central 1 et le central 18 ou le central 19, sont normalement des périphériques du central 1. Cependant rien n'interdit que ces organes 15 et 16 puissent être extérieurs et même que les messages de signalisation qu'ils délivrent proviennent d'une liaison de signalisation.

Dans l'état de la technique comme indiqué précédemment, un organe 15, pour renvoyer un message de signalisation, devait être connecté à une des interfaces 6 à 13 elle-même. Le message constitué devait subir alors dans cette interface 6 à 13 une mise en forme (connue d'avance) pour permettre son incorporation au trafic dans le réseau 17.

Dans l'invention un accès 20 à l'interface 14 sera spécifique au canal de signalisation : tous les messages aboutissant à l'accès 20 en provenance d'un organe 15 ou 16 doivent du fait même qu'ils y aboutissent être considérés comme des messages de signalisation. Ils seront acheminés en conséquence.

Dans l'invention l'interpréteur 14 va alors avoir pour objet de choisir la configuration de signalisation du coupleur 1 pour que celui-ci s'adapte, en temps réel de préférence, sans frais supplémentaire, à la transmission (selon un protocole qui lui est propre) des messages de signalisation qu'il reçoit sur son accès 20, alors que dans l'organe 15 ou dans l'organe 16 on ne sait même pas comment est constitué le canal de signalisation. L'accès 20 peut être un accès physique distinct, ou un adressage particulier d'un bus de communications.

La figure 2 montre ainsi dans une étape 21 la composition d'un message de signalisation SIGNALISATION par un opérateur dans un organe 15. Autrement dit, le message de signalisation est produit par cet organe 15 et il est envoyé à l'interpréteur 14. Dans l'interpréteur 14, le message SIGNALISATION produit par l'organe 15 reçoit au cours d'une opération 22 une chaîne de caractères supplémentaires, prédéterminée, toujours la même. Cette chaîne de caractères représente un ordre d'envoi. Par exemple la chaîne prédéterminée d'envoi sera celle correspondant à l'instruction SEND T2 utilisée notamment dans le protocole de type T2 précité pour envoyer un message de signalisation. Il est à noter que cet ordre prédéterminé d'envoi, SEND T2, sera adjoint au message SIGNALISATION quel que soit le protocole retenu par la suite pour l'acheminer jusqu'au central 19. On constitue ainsi une phrase : SEND T2, SIGNALISATION. La place de la chaîne de caractères SEND T2 est par exemple située au début de la phrase constituée.

Au cours d'une opération 23, l'interpréteur 14 interprète ensuite dans la phrase reçue la chaîne de caractères SEND T2 (placée en tête) représentant l'ordre prédéterminé d'envoi. Ce faisant cette interprétation consiste à adapter l'encapsulation du message SIGNALISATION (sans SEND T2 cette fois) à un protocole de transmission de message de signalisation disponible dans l'interface 5 et à mettre en service l'interface 6 à 13 correspondante. Par exemple, si une seule des interfaces est disponible, par exemple l'interface 9, X25 commuté, l'interprétation de l'ordre prédéterminé d'envoi consistera à configurer la communication de signalisation du coupleur 1 pour qu'il achemine le message de signalisation SIGNALISATION qu'il vient de recevoir sur une liaison 91 reliée à l'interface 2. Cette configuration comportera d'une manière connue des commutations nécessaires des circuits de l'interface 9, et une éventuelle modification du message SIGNALISATION pour réaliser son encapsulation.

Si l'interface 5 comporte plusieurs possibilités de liaisons de signalisation, il pourra être prévu de choisir celle de ces possibilités qui concerne la liaison qui permet d'aboutir au central 18, ou, si même plusieurs liaisons sont possibles, le choix d'une première liaison temporellement disponible, selon un ordre hiérarchique.

Puis au cours d'une étape 24 le message de signalisation est effectivement acheminé.

Lors de sa réception, le message de signalisation SIGNALISATION va être admis sur une entrée d'un autre coupleur 1 mis aussi en place, selon l'invention, dans le central 18. Dans le coupleur 1 de cet autre central 18, le message de signalisation SIGNALISATION va à nouveau être interprété dans un interpréteur 14 au cours d'une étape 25. De préférence le coupleur 1 de cet autre central 18 peut comporter ainsi un deuxième accès pour des messages de signalisation provenant d'un central amont, et qu'il faut éventuellement réacheminer. Les messages admis sur ce deuxième accès subissent alors un traitement différent de celui subit par les messages émanant d'un organe 15 ou 16 de composition et admis sur l'accès 20.

Au cours de l'étape 25 le message SIGNALISATION acheminé se trouvera ainsi affecté d'un drapeau de réception. Sur le plan pratique, on adoptera d'une manière préférée une chaîne de caractères correspondant à un drapeau de type connu, intitulé RECEIVE T2, et utilisable dans le protocole T2. Au cours d'un test 26 consécutif à cette adjonction le central 18 récepteur du message regarde, dans le contenu de ce message RECEIVE T2, SIGNALISATION si le destinataire est atteint. Si le destinataire est atteint, un traitement 27 du message de signalisation est entrepris comme dans l'état de la technique.

Par contre, si le central 18 n'est pas le destinataire, l'interpréteur 14 de cet autre central 18 fait remplacer le drapeau de réception RECEIVE T2 par la chaîne de caractères prédéterminée SEND T2 correspond à l'ordre d'envoi au cours d'une étape 28. L'autre interpréteur 14 de cet autre central relance alors, lui aussi, l'étape 23 de manière à ce que le message soit acheminé plus loin à partir de cet autre central 18, selon un protocole d'acheminement des messages de signalisation disponible pour cet autre central. Ainsi de suite le message se transmet et finit par aboutir au central 19 destinataire où il est traité pour éxécution.

On constate donc que cette manière de faire a pour effet que la transmission du message SIGNALISATION est transparente à travers les différentes interfaces physiques 2 à 13 des canaux de signalisation entre les centraux et n'est plus du tout dépendante des moyens physiques spécifiques réellement disponibles dans les interfaces 5. En adoptant ainsi une telle configuration on s'affranchit simplement des disparités des différents réseaux. En effet, un interpréteur 14 comporte en pratique un microprocesseur associé à un programme. Ou même, il est une session de travail d'un processeur gérant l'autocommutateur. De ce fait, l'interpréteur 14 ne nécessite aucun circuit supplémentaire, juste des parties de programme en plus. Le processeur, ou le microprocesseur dédié, effectuent alors en application de ce programme les commutations et traitements requis.

## Revendications

1. Autocommutateur muni d'un coupleur (1) de communications de signalisation, ce coupleur comportant une pluralité d'interfaces (6, ..., 13) correspondant respectivement à une pluralité de protocoles de transmission de signaux de signalisation ; **caractérisé en ce qu'**il comporte un interpréteur (14) pour :
- recevoir un message de signalisation (SIGNALISATION) ;
- recevoir une chaîne prédéterminée de caractères supplémentaires (SEND T2), représentant un ordre d'envoi et destinée à être adjointe audit message ;
- interpréter cette chaîne de caractères (SEND T2) pour encapsuler ledit message de signalisation (SIGNALISATION) conformément à l'un desdits protocoles de transmission de message de signalisation ;
- et mettre en service l'interface correspondant à ce protocole.

2. Autocommutateur selon la revendication 1, **caractérisé en ce que** le coupleur comporte un récepteur (14) pour adjoindre à un message de signalisation reçu un drapeau (RECEIVE T2) de réception, un détecteur (26) pour reconnaître si ce message de signalisation reçu lui est destiné, et pour le traiter en conséquence, et un traducteur (28) pour remplacer le drapeau de réception par l'ordre prédéterminé dans le cas contraire.

3. Procédé d'envoi d'un message de signalisation (SIGNALISATION) par un autocommutateur ayant un coupleur (1) comportant une pluralité d'interfaces (6, ..., 13) correspondant respectivement à une pluralité de protocoles de transmission de signaux de signalisation ; **caractérisé en ce qu'**il comporte les étapes suivantes :
- recevoir un message de signalisation (SIGNALISATION) ;
- recevoir une chaîne prédéterminée de caractères supplémentaires (SEND T2), représentant un ordre d'envoi et destinée à être adjointe audit message ;
- interpréter cette chaîne de caractères (SEND T2) pour encapsuler ledit message de signalisation (SIGNALISATION) conformément à l'un desdits protocoles de transmission de message de signalisation ;
- et mettre en service l'interface correspondant à ce protocole.

4. Procédé selon la revendication 3, **caractérisé en ce que**, lorsque ledit commutateur reçoit un message de signalisation provenant d'un autre commutateur, ce procédé consiste en outre à :
- adjoindre (25) un drapeau de réception (RECEIVE T2) audit message,
- tester (26) la destination de ce message de signalisation,
- et, si un destinataire de ce message de signalisation est différent de cet autocommutateur récepteur, remplacer (28) le drapeau par cette chaîne de caractères prédéterminée

## Claims

1. A switch provided with a signalling coupler (1), the switch comprising a plurality of interfaces (6, ..., 13) corresponding respectively to a plurality of communication protocols for signalling signals **characterized in that** it includes an interpreter (14) for:
· receiving a signalling message (SIGNALLING)
· receiving a predetermined string with extra characters (SEND T2), representing an order to send and intended to be added to said message;
· interpreting the character string (SEND T2) in order to encapsulate said signalling message (SIGNALLING) in compliance with one of said communication protocols for signalling messages; and
· putting into operation the interface corresponding to the protocol.

2. A switch according to claim 1, **characterized in that** the coupler has a receiver (14) for adding a receive flag (RECEIVE T2) to a received signalling message, a detector (26) for recognizing whether the received signalling message is addressed to the switch, and to process the message accordingly, and a translator (28) for replacing the receive flag with the predetermined order if the switch is not itself the destination.

3. A method of sending a signalling message (SIGNALLING) by a switch having a coupler comprising a plurality of interfaces (6, ..., 13) corresponding respectively to a plurality of communication protocols for signalling signals; the method being **characterized in that** it comprises the following steps:
· receiving a signalling message (SIGNALLING)
· receiving a predetermined string with extra characters (SEND T2), representing an order to send and intended to be added to said message;
· interpreting the character string (SEND T2) in order to encapsulate said signalling message (SIGNALLING) in compliance with one of said communication protocols for signalling messages; and
· putting into operation the interface corresponding to the protocol.

4. A method according to claim 3, **characterized in that**, when said switch receives a signalling message from another switch, the method also consists in:
· adding (25) a receive flag (RECEIVE T2) to said message;
· testing (26) the destination of said signalling message; and
· if a destination of the signalling message is different from said receiving switch, replacing (28) the flag with said predetermined character string.

## Patentansprüche

1. Vermittlungsanlage mit einem Signalisierungskommunikationskoppler (1), wobei dieser Koppler eine Vielzahl von Schnittstellen (6, ..., 13) umfasst, welche jeweils einer Vielzahl von Signalisierungssignal-Übertragungsprotokollen entsprechen; **dadurch gekennzeichnet, dass** sie einen Interpreter (14) enthält, um:
- Eine Signalisierungsnachricht (SIGNALISATION) zu empfangen;
- eine vorher festgelegte Kette von zusätzlichen Zeichen (SEND T2), welche eine Sendefolge darstellen und dazu bestimmt sind, der besagten Nachricht hinzugefügt zu werden, zu empfangen;
- diese Zeichenkette (SEND T2) zu interpretieren, um die besagte Signalisierungsnachricht (SIGNALISATION) gemäß einem der besagten Signalisierungsnachrichtenübertragungsprotokolle einzukapseln;
- und die diesem Protokoll entsprechende Schnittstelle zu aktivieren.

2. Vermittlungsanlage nach Anspruch 1, **dadurch gekennzeichnet, dass** der Koppler einen Empfänger (14), um einer empfangenen Signalisierungsnachricht ein Empfangsflag (RECEIVE T2) hinzuzufügen, einen Detektor (26), um zu erkennen, ob die empfangene Signalisierungsnachricht für sie bestimmt ist, und um diese entsprechend zu verarbeiten, und einen Übersetzer (28), um anderenfalls das Empfangsflag durch die vorher festgelegte Reihenfolge zu ersetzen, umfasst.

3. Verfahren zum Senden einer Signalisierungsnachricht (SIGNALISATION) durch eine Vermittlungsanlage mit einem Koppler (1), welcher eine Vielzahl von Schnittstellen (6, ..., 13) umfasst, welche jeweils einer Vielzahl von Signalisierungssignalübertragungsprotokollen entsprechen; **dadurch gekennzeichnet, dass** es die folgenden Schritte umfasst:
- Empfangen einer Signalisierungsnachricht (SIGNALISATION);
- Empfangen einer vorher festgelegten Kette von zusätzlichen Zeichen (SEND T2), welche eine Sendefolge darstellen und dazu bestimmt sind, der besagten Nachricht hinzugefügt zu werden;
- diese Zeichenkette (SEND T2) zu interpretieren, um die besagte Signalisierungsnachricht (SIGNALISATION) gemäß einem der besagten Signalisierungsnachrichtenübertragungsprotokolle einzukapseln;
- und die diesem Protokoll entsprechende Schnittstelle zu aktivieren.

4. Verfahren nach Anspruch 3, **dadurch gekennzeichnet, dass**, wenn die besagte Vermittlungsanlage eine von einer anderen Vermittlungsanlage gesendete Signalisierungsnachricht empfängt, das Verfahren weiterhin darin besteht:
- Der besagten Nachricht ein Empfangsflag (RECEIVE T2) hinzuzufügen (25),
- die Zieladresse dieser Signalisierungsnachricht zu testen (26),
- und, wenn sich ein Empfänger dieser Signalisierungsnachricht von dieser empfangenden Vermittlungsanlage unterscheidet, das Flag durch diese vorher festgelegte Zeichenkette zu ersetzen (28).
